Europäisches Patentamt

European Patent Office

Office européen des brevets

(19)

(11) Veröffentlichungsnummer: **0 155 485**
**B1**

(12) **EUROPÄISCHE PATENTSCHRIFT**

(45) Veröffentlichungstag der Patentschrift:
18.05.88

(21) Anmeldenummer: **85101272.4**

(22) Anmeldetag: **07.02.85**

(51) Int. Cl.⁴: **F 16 C 11/06**

(54) **Axialkugelgelenk für Gelenkgestänge in Kraftfahrzeugen.**

(30) Priorität: **19.03.84 DE 3409989**

(43) Veröffentlichungstag der Anmeldung:
**25.09.85 Patentblatt 85/39**

(45) Bekanntmachung des Hinweises auf die Patenterteilung:
**18.05.88 Patentblatt 88/20**

(84) Benannte Vertragsstaaten:
**FR GB IT SE**

(56) Entgegenhaltungen:
**DE-C-1 118 624**
**FR-A-2 410 159**
**GB-A-2 004 321**
**US-A-2 587 962**

(73) Patentinhaber: **Lemförder Metallwaren AG,**
**Postfach 1220, D-2844 Lemförde (DE)**

(72) Erfinder: **Schmidt, Andreas, Am Böllershof 18,**
**D-4005 Meerbusch 2 (DE)**

EP 0 155 485 B1

## Beschreibung

Die Erfindung betrifft ein Verfahren zur Herstellung eines Axialkugelgelenkes für Gelenkgestänge in Kraftfahrzeugen nach dem Gattungsbegriff des Patentanspruches 1.

Die DE-A-2 655 353 und das DE-U-7 718 994 beschreiben ein Axialkugelgelenk mit den genannten Gattungsmerkmalen. Die Montage des Kugelgelenks wird nach dem Einsetzen der Gelenkkugel mit der elastischen Gelenkschale in das Gehäuse durch Einwärtsbiegen des Gehäuserandes an der Öffnung abgeschlossen, so daß das Gehäuse außen durchgehend zylindrisch ist, am Gehäuserand jedoch zurücksteht.

Ein außen durchgehend zylindrisches, im Querschnitt rundes, eckiges oder unregelmäßig profiliertes Gehäuse ist Voraussetzung für die Montage des Kugelgelenks im Fahrzeug mittels mechanischer Hilfsvorrichtungen und ist daher unverzichtbar, d. h., daß das Gehäuse keine über den Zylinderquerschnitt vorspringende Konturen aufweisen darf, wohl aber zurückspringende Querschnittsbereiche.

Die axiale Belastbarkeit des Kugelgelenkes wird jedoch durch die Materialstärke des eingebördelten Gehäuserandes bestimmt, so daß herkömmlich ausgebildete Axialkugelgelenke mit einem außen zylindrischen Gehäuse und konstanter Wandstärke am Gehäuserand nur begrenzt belastbar sind. Der in Achsrichtung des mit der Gelenkkugel verbundenen Gelenkzapfens wirksamen Ausreißkraft setzt der eingebördelte Gehäuserand nur ein begrenztes Widerstandsmoment entgegen. Die Materialdicke des Gehäuserandes wird bei bekannten Ausbildungen durch die zur Gelenkmontage bis zur Aquatorebene des Kugelsitzes innen ebenfalls zylindrische Innenseite des Gehäuses bestimmt.

Aus der DE-A-2 758 906 und anderen Literaturstellen sind Axialkugelgelenke bekannt, bei denen der zapfenseitige Gehäuserand gegenüber dem übrigen, außen zylindrischen Gehäuse in der Wandstärke verdickt ausgebildet ist, wodurch eine Erhöhung der Ausreißfestigkeit des Gelenks eintritt. Diese bekannten Gelenke werden jedoch durch rückwärtiges Einsetzen der Gelenkkugel in das Gehäuse montiert, so daß der Gehäuserand an der zapfenseitigen Öffnung nicht eingebördelt wird.

Aufgabe der Erfindung ist demgegenüber die Schaffung eines Axialkugelgelenkes der gattungsgemäßen Art mit einer wesentlichen Vergrößerung der Ausreißkraft des eingebördelten Gehäuserandes.

Zur Lösung dieser Aufgabe schlägt die Erfindung ein Verfahren mit Merkmalen nach dem Kennzeichen des Patentanspruches 1 vor.

Bei einer bevorzugten Anwendung des erfindungsgemäßen Verfahrens wird das Gelenkgehäuse in vertikalen Schnitten in Ebenen der Längsachse des Gelenks am zapfenseitigen Gehäuserand mit einem radial nach außen gestellten Wulstrand ausgebildet, der beim Verschließen des Gehäuses über das zylindrische Mantelprofil des Gehäuses hinaus um die Gelenkkugel herum nach innen gebördelt wird.

Durch diese Merkmale wird der durch die Rundung der Gelenkkugel vorhandene Freiraum hinter der Gelenkkugel zur Materialanhäufung im Bereich der bei axialen Zugkräften wirksamen Stelle des Gehäuses ausgenutzt, so daß beträchtlich höhere Ausreißgrenzwerte bei axialer Zugbelastung erreicht werden. Trotzdem ist das Gehäuse nach dem Verschluß des Gelenks außen glattwandig zylindrisch, weil die Materialanhäufung am Gehäuserand bei der Einbördelung des Gehäuserandes in den Freiraum hinter der Rundung der Gelenkkugel gedrückt wird. Bei der Herstellung von Axialkugelgelenken, deren Gelenkgehäuse an der Außenfläche axial verlaufende Abflachungen aufweist, werden diese Abflachungen nur über eine Teillänge des Gelenkgehäuses ausgeführt, so daß sie vor dem zapfenseitigen Gehäuserand enden und in einen runden Querschnitt des Gehäusemantels übergehen. Ein solches Kugelgelenk kann somit in der gewohnten Weise mittels mechanischer Hilfsvorrichtungen, z. B. Greifwerkzeugen, ganz oder teils selbsttätig im Fahrzeug montiert werden. Die axiale Belastung des Kugelgelenkes in Ausreißrichtung ist jedoch wesentlich größer als bei bekannten Ausbildungen.

Konstruktive Besonderheiten einer Ausbildung nach dem erfindungsgemäßen Verfahren werden nachstehend anhand einiger auf der Zeichnung dargestellten Ausführungsbeispiele erläutert:

Auf der Zeichnung zeigen:

Figur 1 eine Seitenansicht eines Axialkugelgelenks mit teilweisem Schnitt durch das Gehäuse,

Figur 2 eine Seitenansicht des Gehäuses im Beispiel nach Figur 1 vor der Gelenkmontage,

Figur 3 ein gegenüber der Figur 2 abgeändertes Ausführungsbeispiel des Gehäuses vor der Gelenkmontage,

Figur 4 zeigt das gleiche Gehäuse nach der Gelenkmontage und

Figur 5 ist ein teilweiser Schnitt in Achsebene eines Axialkugelgelenkes in einem weiteren Ausführungsbeispiel.

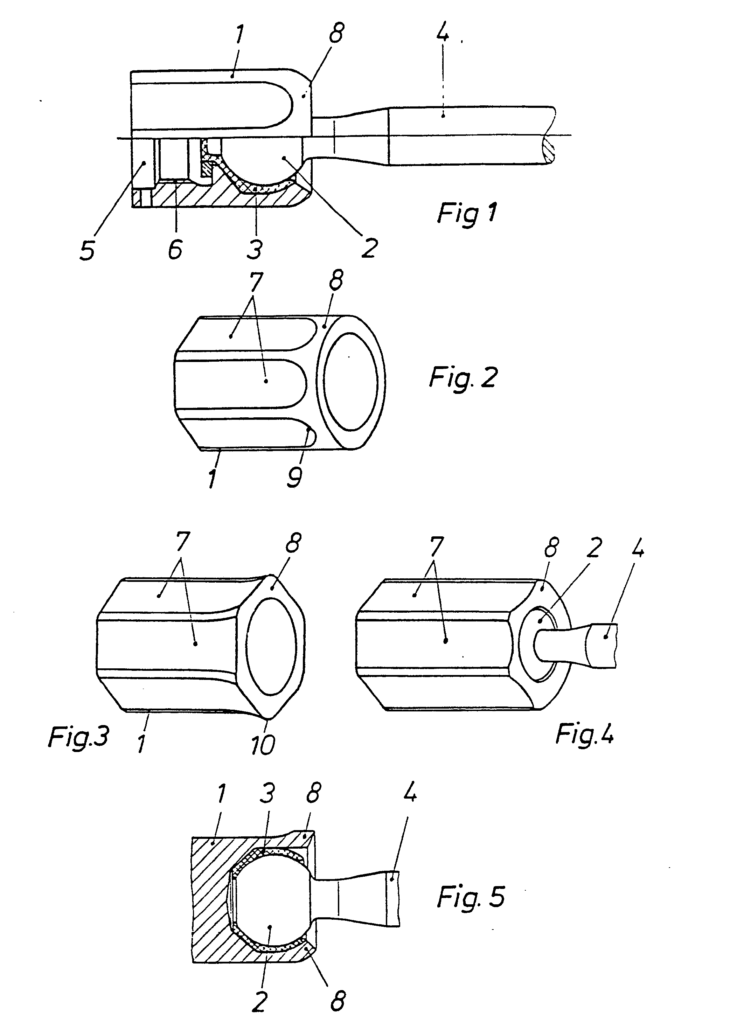

Das Axialkugelgelenk besteht aus dem Gehäuse 1 und der Gelenkkugel 2, die in dem Gehäuse 1 in einer Gelenkschale 3 aus einem elastischen Werkstoff gelagert ist und an der aus dem Gehäuse 1 herausragenden Seite einen Gelenkzapfen 4 aufweist, der mit einem Gestänge oder dergleichen verbunden ist. Auf der der Gelenkkugel 2 gegenüberliegenden Seite weist das Gehäuse 1 Vorkehrungen für die Befestigung an einem anderen Gestängeteil auf. Dargestellt ist eine Gehäuseausnehmung 5 mit einem Innengewinde 6, in welches das Ende eines anderen Gestängeteils einschraubbar ist. Das Gehäuse 1 ist nach der Montage außen glattwandig zylindrisch mit gleichbleibendem Querschnitt. In der Figur 2 ist ein Gehäuse ursprünglich runden Querschnitts dargestellt, welches parallel zueinander verlaufende Abflachungen 7 aufweist. Die Abflachungen 7 sind am zapfenseitigen Gehäuserand 8 nicht bis zum Ende durchgeführt, so daß die Abflachungen 7 in einer Rundung 9 auslaufen. Dadurch entsteht am zapfenseitigen Gehäuserand 8 eine gegenüber dem übrigen Wandungsquerschnitt des Gehäuses 1 nach außen vorspringende Materialanhäufung. Diese Materialanhäufung wird beim Verschließen des Gelenkes nach dem Einsetzen der Gelenkkugel 2 in die elastische Gelenkschale 3 nach innen gebogen, wie es aus der Figur 1 ersichtlich ist, bis die Außenwandungen des Gehäuses 1 wieder durchgehend glattwandig zylindrisch sind, wie es für die Montage des Gelenkes im Fahrzeug mittels selbsttätiger oder teilweise selbsttätiger Hilfsvorrichtungen erforderlich ist.

Bei dem Beispiel in Figur 3 ist das Gehäuse 1 am Verschlußrand 8 mit einer nach außen kragenden Materialanhäufung 10 versehen, so daß die Abflachungen 7 durchgehen, jedoch am Verschlußrand 8 bogenförmig nach außen geführt sind. Beim Verschließen des Gelenkes wird die Materialanhäufung nach innen gedrückt, so daß die Abflachungen 7 glattflächig durchgehen und ein außenzylindrisches Gehäuse erzielt wird, wie es die Figur 4 im Beispiel zeigt. Vergrößert ist eine solche Ausbildung oder eine ähnliche Ausbildung in dem Querschnitt nach Figur 5 dargestellt. Anstelle der Abflachungen 7 kann auch ein im Querschnitt kreisrundes Gehäuse 1 mit einer Materialanhäufung im Bereich des zapfenseitigen Gehäuserandes 8 zur Anwendung kommen. In dem oberen Teil ist diese Materialanhäufung 8 vor dem Verschließen des Gelenkes nach dem Einsetzen der Gelenkkugel 2 in die Gelenkschale 3 dargestellt. Der untere Teil zeigt einen Schnitt durch das Gelenk nach dem Verschließen, d. h. nach dem Einbördeln des Gehäuserandes 8 mit der Materialanhäufung.

**Patentansprüche**

1. Verfahren zur Herstellung eines Axialkugelgelenkes für Gelenkgestänge in Kraftfahrzeugen mit einer von einer Gelenkschale (3) aus elastischem Werkstoff umgebenen, an einem Gelenkzapfen (4) befestigten Gelenkkugel (2) und mit einem metallischen, außen im wesentlichen zylindrischen Gelenkgehäuse (1), welches stirnseitig eine Öffnung aufweist, durch welche die Gelenkkugel eingesetzt wird und aus welcher der Gelenkzapfen herausragt, wobei das Gehäuse vor dem Einsetzen der Gelenkkugel innen, vom Öffnungsrand ausgehend, hohlzylindrisch ausgebildet ist und die Gelenkkugel durch Einbördeln des zapfenseitigen Gehäuserandes in dem Gehäuse gehalten ist, dadurch gekennzeichnet, daß das Gehäuse (1) in seinem zapfenseitigen Randbereich (8) außen mit einer Materialanhäufung versehen wird, so daß es in diesem Bereich zumindest über einen Teilumfang des Gehäuserandes eine größere Wandstärke aufweist, als in dem an den Randbereich axial anschließenden Bereich des Gehäuses (1), und daß die Materialanhäufung nach dem Einbördeln des Gehäuserandes (8) innerhalb des Querschnitts des zylindrischen Außenmantels des Gehäuses (1) liegt.

2. Verfahren nach Anspruch 1 zur Herstellung eines Axialkugelgelenkes mit einem metallischen Gelenkgehäuse, welches an der Außenfläche axial verlaufende Abflachungen aufweist, dadurch gekennzeichnet, daß die Abflachungen (7) nur über eine Teillänge des Gelenkgehäuses ausgeführt sind, vor dem zapfenseitigen Gehäuserand (8) enden und in einen runden Querschnitt des Gehäusemantels übergehen.

3. Verfahren nach Anspruch 2, dadurch gekennzeichnet, daß das Gelenkgehäuse (1) in vertikalen Schnitten in Ebenen der Längsachse des Gelenks am zapfenseitigen Gehäuserand (8) mit einem radial nach außen gestellten Wulstrand (10) ausgebildet wird, der beim Verschließen des Gehäuses (1) über das zylindrische Mantelprofil des Gehäuses (1) hinaus um die Gelenkkugel (2) herum nach innen gebördelt wird.

**Claims**

1. Method for the production of an axial ball joint for link rods of automobile vehicles with a spherical part (2) surrounded by a joint shell (3) of resilient material and fastened to a link pin (4) and with a metal joint housing (1) which is substantially cylindrical externally, which housing is provided at its front end with an opening through which the spherical part is inserted and from which the link pin projects, wherein the housing, prior to the insertion of the spherical part, is formed internally, starting from the edge of the opening, as a hollow cylinder and the spherical part is held in the housing by flanging of the edge of the housing on the side of the pin, characterized in that the housing (1) is provided externally in its edge area (8) on the side of the pin with a material mass so that it comprises in this zone, at least over part of the periphery of the housing edge, a greater wall thickness than in the area of the housing (1) axially adjacent to the edge area, and in that the material mass lies within the cross-section of the cylindrical outer jacket of the housing (1) after the flanging of the housing edge (8).

2. Method as claimed in claim 1 for the production of an axial ball joint with a metal joint housing which comprises axially extending flat areas on its outer surface, characterized in that the flat areas (7) are provided only over part of the length of the joint housing, end before the edge (8) of the housing on the side of the pin and go on to become a round cross-section of the housing jacket.

3. Method as claimed in claim 2, characterized in that the joint housing (1) is provided in vertical sections in the plane of the longitudinal axis of the joint on the housing edge (8) on the side of the pin with a radially outwardly disposed beaded edge (10) which, on closure of the housing (1) over the cylindrical jacket profile of the housing (1) is inwardly flanged about the spherical part (2).

## Revendications

1. Procédé de fabrication d'une articulation à rotule axiale pour tiges articulées de véhicule automobile comprenant une sphère (2) fixée à une queue (4) et ceinturée par une coquille (3) en un matériau élastique et un boîtier (1) métallique extérieurement pratiquement cylindrique dont la face frontale présente une ouverture pour l'insertion de la sphère et d'où sort la queue, où avant insertion de la sphère le boîtier présente une configuration cylindrique creuse partant du bord de l'ouverture et où la sphère est retenue dans le boîtier par sertissage du bord de ce dernier du côté queue, caractérisé en ce que la zone de bordure (8) extérieure du côté queue du boîtier (1) porte une accumulation de matériau de manière qu'il présente au moins dans cette zone, sur une partie de la périphérie de son bord une épaisseur de paroi supérieure à celle du domaine du boîtier (1) qui prolonge axialement la zone de bordure et en ce que après sertissage du bord du boîtier l'accumulation de matériau se trouve à l'intérieur de la section de la paroi extérieure cylindrique du boîtier (1).

2. Procédé selon la revendication 1 de fabrication d'une articulation à rotule axiale à boîtier métallique dont la surface extérieure porte des méplats courant axialement caractérisé en ce que les méplats (7) s'étendent seulement sur une partie de la longueur du boîtier, s'arrêtent avant le bord (8) côté queue du boîtier et se convertissent en une section arrondie de la périphérie du boîtier.

3. Procédé selon la revendication 2, caractérisé en ce que le boîtier (1), en coupe verticale par un plan axial longitudinal de l'articulation, comprend un bourrelet (10) radial qui est dirigé vers l'extérieur au bord (8) côté queue du boîtier et qui, lors de la fermeture du boîtier (1), sera serti suivant l'entour du profil cylindrique de la périphérie du boîtier (1) et tout autour de la sphère.

Fig 1

Fig. 2

Fig.3

Fig.4

Fig. 5